# EUROPEAN PATENT APPLICATION

(11) **EP 1 180 708 A2**
(43) Date of publication of application: **20.02.2002**
(21) Application number: 01118799.4
(22) Date of filing: 09.08.2001
(51) Int. Cl.: G02B 6/44

(54) **A rotation device for reorienting an optical fiber ribbon matrix**

(30) Priority: 15.08.2000 US 639267
(71) Applicant: F.C.I. - Framatome Connectors International, 92400 Courbevoie (FR)
(72) Inventor: Demangone, Drew A., Latrobe, Pennsylvania 15650 (US)
(74) Representative: Beetz & Partner Patentanwälte

(57) **Abstract**

A rotation device (100) for an optical shuffle is disclosed. The rotation device includes a housing (102) having a twisted guide channel (104) extending through an interior portion thereof. The twisted guide channel (104) is adapted to receive the ribbon matrix (110) in a first orientation at a receiving end (106) thereof, and to reorient the ribbon matrix (110) as the ribbon matrix is guided through the twisted guide channel into a second orientation at an output end (108) thereof. The rotation device can also include an input potting chamber (122) adjacent to the receiving end (106) of the twisted guide channel (104), for potting the ribbon matrix (110) in the first orientation, and an output potting chamber (124), adjacent to the output end of the twisted guide channel, for potting the ribbon matrix in the second orientation.

## Description

### Field of the Invention

This invention relates generally to a shuffle device, and more particularly, to a rotation device for reorienting an optical fiber ribbon matrix to form an optical shuffle.

### Background of the Invention

Optical fibers provide a well-known medium for conveying information in data and communications systems, such as computer and telephone systems. Typically, optical fibers are packaged into ribbons, each of which includes a plurality of fibers in a linear array. The array of fibers can be encapsulated in a polymer casing, or taped to form the ribbon.

It is often desirable to switch information among a network of systems that use optical fibers as information conveyance media. This can be accomplished by directing into each system one or more fibers output from each of the other systems. This is known as shuffling the fibers, and the mechanism by which this is accomplished is known as an optical shuffle. An optical shuffle in which one fiber output from each system is directed to a different system is known as a perfect shuffle. Thus, in a perfect shuffle, each system can communicate with every other system.

There is a need in the art for a compact optical shuffle that can reorient the fibers of a plurality of ribbons in a minimum of space and with a minimum of physical strain on the fibers. It is an objective of the present invention, therefore, to provide a rotational device for an optical shuffle that facilitates the switching of optical fibers from each of a plurality of input ribbons to each of a plurality of output ribbons. It is further an object of the present invention to provide such a device that requires a minimum of space and minimizes strain on the fibers.

### Summary of the Invention

The present invention is a rotation device for an optical shuffle that is adapted to reorient a ribbon matrix comprising a plurality of ribbons, each of which includes a plurality of optical fibers in a linear array. The rotation device comprises a housing having a twisted guide channel extending through an interior portion thereof. The twisted guide channel is adapted to receive the ribbon matrix in a first orientation at a receiving end thereof, and to reorient the ribbon matrix as the ribbon matrix is guided through the twisted guide channel into a second orientation at an output end thereof.

The rotation device can also include an input potting chamber adjacent to the receiving end of the twisted guide channel, for potting the ribbon matrix in the first orientation, and an output potting chamber, adjacent to the output end of the twisted guide channel, for potting the ribbon matrix in the second orientation.

### Brief Description of the Drawings

The invention is further described in the accompanying drawings in which:
Figure 1 is an isometric view of a preferred embodiment of a rotation device for an optical shuffle;
Figure 2 is a cross sectional view of an input ribbon matrix;
Figures 3A and 3B are cross sectional views of an output ribbon matrix before and after re-ribbonization; and
Figure 4 is a longitudinal cross section of a preferred embodiment of a rotation device according to the invention having input and output potting chambers.

### Detailed Description of Preferred Embodiments

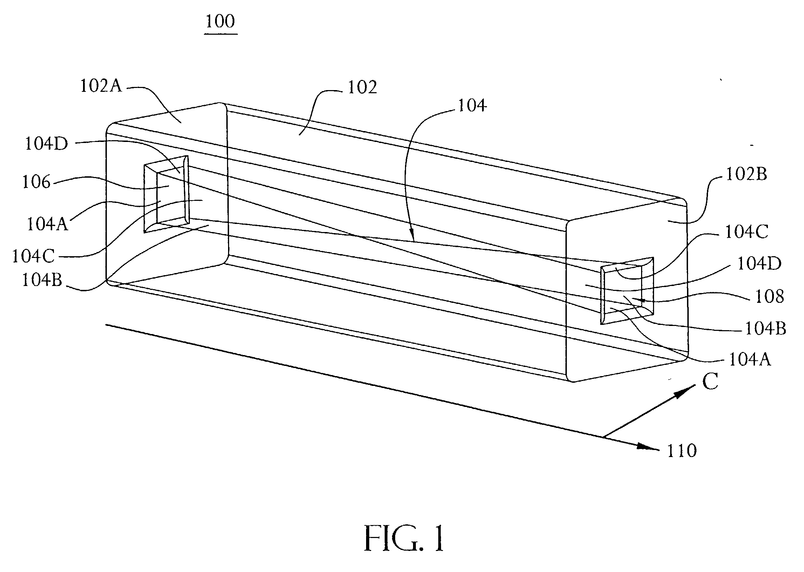

Figure 1 is an isometric view of a preferred embodiment of a rotation device 100 for an optical shuffle. Device 100 comprises a housing 102 having a twisted guide channel 104 extending through an interior portion thereof. Although housing 102 can have any shape, it is preferred for mounting purposes and for space allocation that housing 102 has a generally block-shaped exterior. Twisted guide channel 104 has a receiving end 106, and an output end 108. A plurality of guide walls 104A, 104B, 104C, 104D extend from receiving end 106 to output end 108, and rotate relative to longitudinal axis 110 of device 100 as they extend through housing 102. Housing 102 could be one piece, or could be made from multiple pieces.

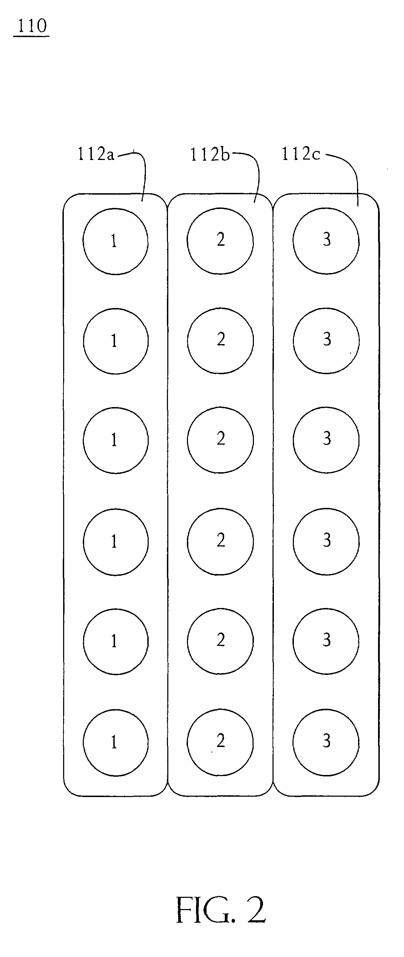

Receiving end 106 of twisted guide channel 104 is adapted to receive a ribbon matrix in a first orientation. Preferably, receiving end 106 is sized and shaped to correspond to the cross-section of the ribbon matrix, which, typically, is elongated in a direction of the linear array of fibers. Figure 2 depicts a cross sectional view of typical a ribbon matrix 110, which includes a plurality of ribbons 112a-c. As shown, each ribbon 112a-c includes a plurality of optical fibers 1, 2, 3, respectively, in a linear array and is oriented along a direction that is generally perpendicular to the direction of arrow C. For discussion purposes, it can be said that fibers 1 (and ribbon 112a) come from a first system, that fibers 2 (and ribbon 112b) come from a second system, and that fibers 3 (and ribbon 112c) come from a third system. Although described as optical fibers, device 100 could be used to shuffle any type of conductive element, such as an electrical wire (not shown).

As shown in Figure 2, ribbon matrix 110 includes three ribbons, although this number is purely exemplary and ribbon matrix 110 can include any number of ribbons. Similarly, although each ribbon 112a-c is shown in Figure 2 to include six fibers, a ribbon can include any number of fibers. In a preferred embodiment of the present invention, rotation device 100 is adapted to receive and reorient a ribbon matrix including 12 ribbons of 12 fibers each (*e.g.*, device 100 can be a 12x12 optical shuffle).

Receiving end 106 of device 100 can be moved onto input ribbon matrix 110 (or, conversely, ribbon matrix 110 can be inserted into receiving end 106) until ribbon matrix 110 is received into guide channel 104. Device 100 can then be screwed onto ribbon matrix 110 until ribbons 112a-c extend beyond output end 108 of device 100. As shown in Figure 1, guide channel 104 is twisted so that, as the ribbon matrix is guided through rotation device 100, the ribbon matrix is rotated into a second orientation at output end 108. Although the output ribbon matrix can, in general, have any orientation relative to the orientation of the input ribbon matrix, (*i*.*e*., guide channel 104 can be twisted to rotate the ribbon matrix any number of degrees), for reasons that will be described in detail below, it is preferred that guide channel 104 is twisted to rotate the ribbon matrix approximately 90 degrees.

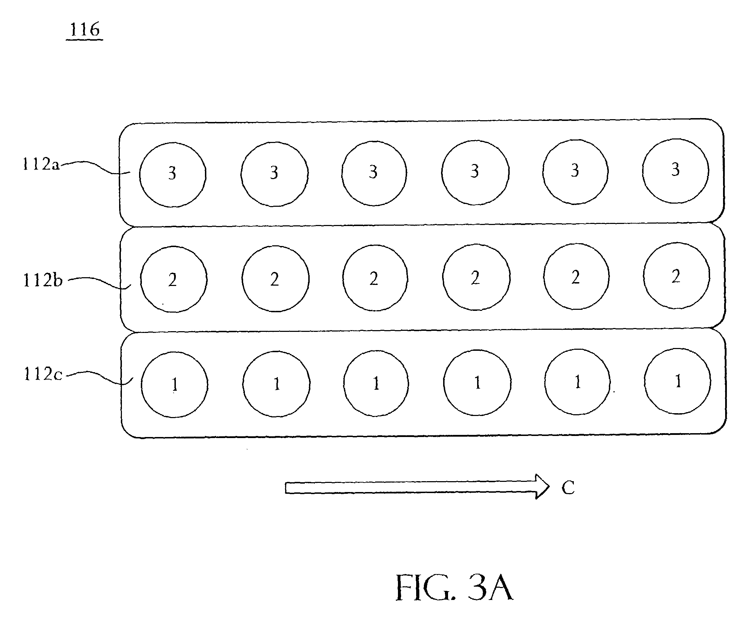

The portions of the ribbons that extend beyond output end 108 of device 100 form an output ribbon matrix, a cross sectional view of which is depicted in Figure 3A. As shown, output ribbon matrix 116 has been rotated approximately 90 degrees relative to input ribbon matrix 110 (*i*.*e*., each ribbon is now oriented along the direction of arrow C).

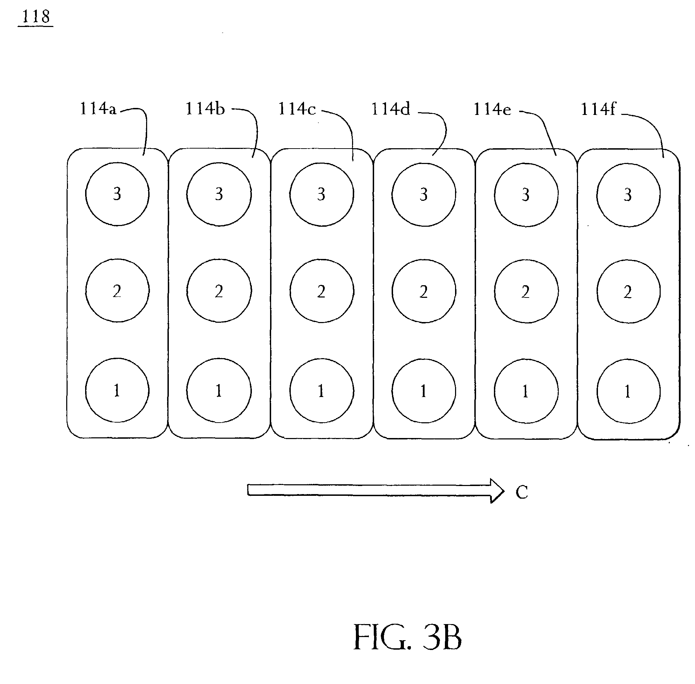

Output ribbon matrix 116 can now be "re-ribbonized" to form a re-ribbonized output ribbon matrix, a cross sectional view of which is depicted in Figure 3B. The output ribbon matrix can be re-ribbonized in any manner known to those in the art, although it is preferred that the encapsulation is removed from a distal portion of each ribbon by peeling, or through the use of chemicals or heat strippers, or by any other suitable technique known in the art, to expose the optical fibers.

The exposed fibers can then be encapsulated to form a plurality of output ribbons 114a-f, which, in combination, form a re-ribbonized output ribbon matrix 118. Preferably, each output ribbon 114a-f includes one fiber from each input ribbon, and is oriented in the same direction as ribbons 112a-c in input ribbon matrix 110 (see Figure 2), that is, generally perpendicular to the direction of arrow C as shown in Figure 3B.

Alternatively, the ribbons could be unribbonized before insertion through guide channel 104, then re-ribbonized after insertion. In yet another example, the ribbons could be unribbonized and reribbonized before insertion through channel 104. In any event, the optical fibers remain discrete (*i*.*e*., are not fused together) as they extend through housing 102. Also, although it is preferred, for routing purposes, that output ribbons 114a-f are in the same orientation as input ribbons 112a-c, it should be understood that, in general, output ribbons 114a-f can be in any orientation relative to the orientation of input ribbons 112a-c.

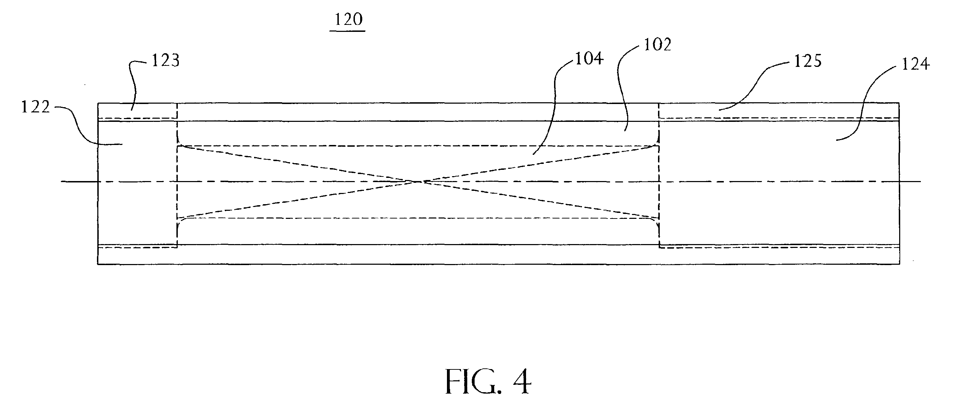

Figure 4 depicts a longitudinal cross section of another preferred embodiment of a rotation device 120 according to the present invention. Device 120 includes a housing 102 and twisted guide channel 104 as described above in connection with device 100. Device 120 also includes an input potting chamber 122 for "potting" the input ribbon matrix. That is, once device 120 is screwed onto the ribbon matrix, potting chamber 122 can be filled with epoxy or other such potting material to hold the input ribbon matrix in place. This stabilizes the input ribbons and reduces strain on the fibers.

Device 120 can also include an output potting chamber 124, which can also be filled (after re-ribbonization) with epoxy or other such potting material to stabilize the re-ribbonized output ribbon matrix. Potting the re-ribbonized output ribbon matrix in output chamber 124 also serves to seal any portions of the fibers that may remain exposed as a result of re-ribbonization. Thus, device 120 can serve to enclose the shuffled ribbons, without the need for any additional housing.

A rotation device according to the present invention can be sized for any application, although it is usually desirable that the device be as small as possible, especially for applications where the space available for reorienting the ribbon matrix is limited. For example, in a preferred embodiment, device 120 can be about 50 mm long and have a cross section of about 10 mm x 10 mm. Input chamber 122 can be about 5 mm long and have a cross-section of 8mm x 8mm. Walls 123 of input chamber 122 can be about 1 mm thick. Guide channel housing 102 can be about 30 mm long. Output chamber 124 can be about 15 mm long, with a cross-section of about 8mm x 8mm. Walls 125 of output chamber 124 can be about 1 mm thick. Guide channel 104 can have a cross section of about 3.6 mm x 4.5 mm.

A rotation device according to the present invention can be made of a polymer, such as plastic, by methods such as rapid prototyping, stereo lithography. It can be fabricated in one piece, or in halves that are pressed together. For durability, it is preferred that the device is fabricated in one piece.

While the present invention has been described in connection with the preferred embodiments of the various figures, it is to be understood that other similar embodiments may be used or modifications and additions may be made to the described embodiment for performing the same function of the present invention without deviating therefrom. Therefore, the present invention should not be limited to any single embodiment, but rather construed in breadth and scope in accordance with the recitation of the appended claims.

## Claims

1. A rotation device (100) for reorienting an optical fiber ribbon matrix (110), the ribbon matrix (110) comprising a plurality of ribbons (112a-c), each ribbon comprising a plurality of optical fibers (1, 2, 3) in a linear array, the rotation device (100) comprising:
a housing (102) having a twisted guide channel (104) extending through an interior portion thereof, the twisted guide channel (104) having a receiving end (106) and an output end (108),
wherein the twisted guide channel (104) is adapted to receive the ribbon matrix (110) in a first orientation at the receiving end (106) thereof, and to reorient the ribbon matrix (110) as the ribbon matrix is guided through the twisted guide channel (104) into a second orientation at the output end (108) thereof.

2. The device (100) of claim 1, wherein the twisted guide channel (104) is adapted to rotate the ribbon matrix (110) by approximately 90 degrees.

3. The device (100) of claim 1, further comprising:
an input potting chamber (122), adjacent to the receiving end (106) of the twisted guide channel (104), for potting the ribbon matrix (110) in the first orientation.

4. The device (100) of claim 1, further comprising:
an output potting chamber (124), adjacent to the output end (108) of the twisted guide channel (104), for potting the ribbon matrix (110) in the second orientation.

5. The device (100) of claim 3, further comprising:
an output chamber (124), adjacent to the output end (108) of the twisted guide channel (104), for potting the ribbon matrix (110) in the second orientation.

6. The device (100) of claim 1, wherein the twisted guide channel (104) comprises a plurality of guide walls (104A-104D) extending from the receiving end (106) of the twisted guide channel (104) to the output end (108) thereof, wherein each said guide wall (104A-104D) rotates relative to a longitudinal axis of the device as they extend through the housing (102).

7. The device (100) of claim 1, wherein the housing (102) has a generally block-shaped exterior.

8. A shuffle device for rearranging a matrix (110) of conductive elements extending therethrough, said shuffle device comprising:
first and second ends (106, 108); and
a centrally located channel (104) extending between said first and second ends (106, 108) having a shape that rearranges the matrix (110) from a first orientation, before the matrix enters the shuffle device, to a second orientation, different from said first orientation, after the matrix (110) exits the shuffle device.

9. The shuffle device as recited in claim 8, wherein said channel (104) includes a twist.

10. The shuffle device as recited in claim 9, wherein said twist is approximately 90 degrees.

11. A shuffle assembly, comprising:
a matrix (110) of conductive elements (1, 2, 3); and
a shuffle device (100) receiving said conductive elements, said shuffle device including:
first and second ends (106, 108); and
a centrally located channel (104) extending between said first and second ends for receiving said matrix (110),
wherein said matrix (110) has a first orientation before entering the shuffle device, and a second orientation, different from said first orientation, after exiting the shuffle device.

12. The shuffle assembly as recited in claim 11, wherein said second orientation is rotated 90 degrees relative to said first orientation.

13. The shuffle assembly as recited in claim 11, wherein said channel (104) includes a twist.

14. The shuffle assembly as recited in claim 13, wherein said twist is approximately 90 degrees.

15. The shuffle assembly as recited in claim 11, wherein said conductive elements (1, 2, 3) are optical fibers.

16. The shuffle assembly as recited in claim 15, wherein said optical fibers remain discrete.

17. A method of rearranging a matrix (110) of conductive elements, the method comprising the steps of:
providing a shuffle device with first and second ends (106, 108), and a centrally located channel (104) extending between said first and second ends (106, 108);
inserting a matrix (110) of conductive elements (1, 2, 3) into said channel (104);
wherein said matrix (110) has a first orientation before entering said shuffle device and a second orientation, different from said first orientation, after exiting said shuffle device.

18. The method as recited in claim 17, further comprising the step of twisting said matrix (110).

19. The method as recited in claim 18, wherein the twisting step comprises twisting said matrix 90 degrees.

20. The method as recited in claim 18, wherein the twisting step is accomplished via a twist in said channel (104).
